# EUROPEAN PATENT APPLICATION

(11) **EP 1 733 942 A1**
(43) Date of publication of application: **20.12.2006**
(21) Application number: 06252860.9
(22) Date of filing: 02.06.2006
(51) Int. Cl.: B60T 8/48

(54) **Electronically controlled brake system**

(30) Priority: 17.06.2005 KR 20050052319
(71) Applicant: Mando Corporation, Pyungtaek-City, Kyungki-Do (KR)
(72) Inventor: I-Jin, Yang, Pyungteak-City Kyonggi-Do (KR)
(74) Representative: Pratt, David Martin

(57) **Abstract**

An electronically controlled brake system having a structure capable of achieving a rapid increase in the pressure of brake oil while reducing the operation time of each pump during an active control operation. The electronically controlled brake system comprises a master cylinder assembly to provide a braking force, a plurality of brake cylinders to perform a braking operation, first and second hydraulic circuits to connect the master cylinder assembly to the plurality of brake cylinders, to define a closed circuit, and first and second pump units provided, respectively, at the first and second hydraulic circuits, to realize an active control operation. The first hydraulic circuit includes a pair of suction lines to connect a suction side of the first pump unit to the master cylinder assembly, and the second hydraulic circuit includes a pair of suction lines to connect a suction side of the second pump unit to the master cylinder assembly, each suction line being provided with a suction-side solenoid valve.

## Description

### CROSS-REFERENCE TO RELATED APPLICATION

This application claims the benefit of Korean Patent Application No. 2005-0052319, filed on June 17, 2005 in the Korean Intellectual Property Office, the disclosure of which is incorporated herein by reference.

### BACKGROUND OF THE INVENTION

### 1. Field of the Invention

The present invention relates to an electronically controlled brake system, and, more particularly, to an electronically controlled brake system having a structure capable of reducing an operation time of each pump during an active control operation while achieving a rapid increase in oil pressure.

### 2. Description of the Related Art

Generally, electronically controlled brake systems are used to efficiently prevent generation of a slippage phenomenon in a vehicle, and thus, to obtain a strong and stable braking force. For such electronically controlled brake systems, there are an anti-lock brake system (ABS) adapted to prevent slippage of wheels during a braking operation, a brake traction control system (BTCS) adapted to prevent slippage of drive wheels during quick start or sudden acceleration, and a vehicle dynamic control system (VDCS), which is a combination of the ABS and BTCS to stably maintain the running state of a vehicle by controlling the pressure of brake oil.

Such an electronically controlled brake system includes a plurality of solenoid valves to control the pressure of brake oil transmitted to hydraulic brakes mounted to wheels of a vehicle, a pair of low-pressure accumulators to temporarily store the brake oil discharged from the hydraulic brakes, a pair of high-pressure accumulators, a single motor, a pair of pumps to forcibly pump the brake oil temporarily stored in the low-pressure accumulators, and an electric control unit (ECU) to electrically control the solenoid valves and motor. These constituent elements are received in a compact state in a modulator block made of an aluminum material.

Each pump forcibly pumps brake oil stored in a low-pressure state in an associated one of the low-pressure accumulators toward an associated one of the high-pressure accumulators so that the brake oil is used to perform desired functions of the ABS, ETCS, and VDC while being transferred to the hydraulic brakes or a master cylinder assembly.

However, in the conventional electronically controlled brake system, there is a disadvantage in that an operation time of each pump is prolonged and also, operational noise of the pump is excessively increased. This is because only a single oil line is provided to connect the master cylinder assembly to a suction side of each pump, and the brake oil stored in the low-pressure accumulators can be discharged only when the pumps are driven. Furthermore, in the conventional electronically controlled brake system having two hydraulic circuits, the two pumps are coupled to the single motor in a dual pump structure such that each hydraulic circuit contains one pump. In this structure, however, each pump must perform both suction and discharge strokes one time as a rotating shaft of the motor rotates one turn, so as to supply pressurized oil to the associated hydraulic circuit. As a result, a master cylinder shows an increased pressure pulsation of oil discharged under pressure in accordance with operation of an associated one of the pumps, and therefore, there is a disadvantage in that the hydraulic brake(s) cannot achieve a rapid increase in braking pressure by operation of the pump during an active control operation.

### SUMMARY OF THE INVENTION

The present invention has been made in order to solve the above problems. It is an aspect of the invention to provide an electronically controlled brake system having a structure capable of reducing an operation time of each pump during an active control operation.

It is a further aspect of the invention to provide an electronically controlled brake system having a structure capable of reducing pressure pulsation of oil while achieving a rapid increase in oil pressure during an active control operation.

Consistent with one aspect, an exemplary embodiment of the present invention provides an electronically controlled brake system comprising: a master cylinder assembly to provide a braking force; a plurality of brake cylinders to initiate a braking operation; first and second hydraulic circuits to connect the master cylinder assembly to the plurality of brake cylinders, to define a closed circuit; and first and second pump units provided, respectively, at the first and second hydraulic circuits to realize an active control operation, and the first hydraulic circuit may include a pair of suction lines to connect a suction side of the first pump unit to the master cylinder assembly, and the second hydraulic circuit may include a pair of suction lines to connect a suction side of the second pump unit to the master cylinder assembly, each suction line being provided with a suction-side solenoid valve.

The master cylinder assembly may include a master cylinder and an oil reservoir, and the pair of suction lines of each hydraulic circuit are connected, respectively, to the master cylinder and oil reservoir.

The master cylinder assembly may include a master cylinder and an oil reservoir, and the pair of suction lines of each hydraulic circuit are connected to the master cylinder.

The first and second pump units may be commonly connected to a single motor to be operated by the motor.

The first pump unit may include first and second pumps, and the second pump unit may include third and fourth pumps, the first to fourth pumps being radially arranged around a rotating shaft of the motor.

The first and second pumps of the first pump unit may be arranged, respectively, at angular positions of 0 degree and 90 degree around the rotating shaft of the motor, and the third and fourth pumps of the second pump unit are arranged, respectively, at angular positions of 180 degree and 270 degree.

The first and second pumps of the first pump unit may be arranged, respectively, at angular positions of 0 degree and 180 degree around the rotating shaft of the motor, and the third and fourth pumps of the second pump unit are arranged, respectively, at angular positions of 90 degree and 270 degree.

A pair of discharge lines connected to the first and second pumps may be incorporated into a single common discharge line, and a pair of discharge lines connected to the third and fourth pumps are incorporated into another single common discharge line.

Each common discharge line may be provided with a single discharge-side solenoid valve.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the exemplary embodiments of the invention will become apparent and more readily appreciated from the following description of the embodiments, taken in conjunction with the accompanying drawings, of which:
FIG. 1 is a hydraulic circuit diagram of an electronically controlled brake system consistent with a first embodiment of the present invention;
FIGS. 2A and 2B are schematic views illustrating different arrangements of a motor and a pair of pump units shown in FIG. 1;
FIG. 3 is a hydraulic circuit diagram of an electronically controlled brake system consistent with a second embodiment of the present invention; and
FIG. 4 is a hydraulic circuit diagram of an electronically controlled brake system consistent with a third embodiment of the present invention.

### DETAILED DESCRIPTION OF THE PREFERRED EMBODIMENTS

Reference will now be made in detail to exemplary embodiments of the present invention, examples of which are illustrated in the accompanying drawings, wherein like reference numerals refer to like elements throughout. The embodiments are described below to explain the present invention by referring to the figures.

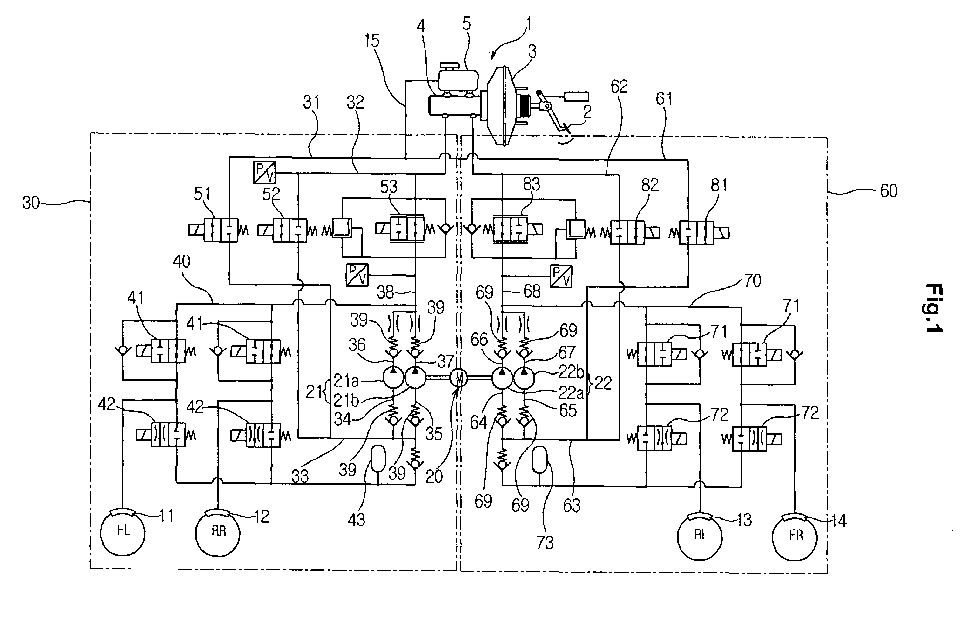

FIG. 1 is a hydraulic circuit diagram of an electronically controlled brake system consistent with a first embodiment of the present invention.

As shown in FIG. 1, an anti-lock brake system according to the first embodiment of the present invention comprises a master cylinder assembly 1 to provide a vehicle with a braking force, and a plurality of brake cylinders to perform a braking operation using the braking force generated from the master cylinder assembly 1. The brake cylinders include a front left wheel (hereinafter, referred to as FL) brake cylinder 11, a rear right wheel (hereinafter, referred to as RR) brake cylinder 12, a rear left wheel (hereinafter, referred to as RL) brake cylinder 13, and a front right wheel (hereinafter, referred to as FR) brake cylinder 14,

To transmit the braking force, generated from the master cylinder assembly 1, to the FL brake cylinder 11, RR brake cylinder 12, RL brake cylinder 13, and FR brake cylinder 14, respectively, first and second hydraulic circuits 30 and 60 are provided, respectively, to connect the master cylinder assembly 1 to the FL and RR brake cylinders and to the RL and FR brake cylinder 13 and 14. The first and second hydraulic circuits 30 and 60 define a closed circuit for the circulation of brake oil therebetween. The first and second hydraulic circuits 30 and 60 are provided, respectively, with first and second pump units 21 and 22, which are connected to a single motor 20.

The first hydraulic circuit 30 includes a plurality of oil lines to circulate the brake oil between the master cylinder assembly 1 and the FL and RR brake cylinders 11 and 12, so as to obtain a desired braking force. Similarly, the second hydraulic circuit 60 includes a plurality of oil lines to circulate the brake oil between the master cylinder assembly 1 and the RL and FR brake cylinders 13 and 14, so as to obtain a desired braking force. The first and second hydraulic circuits 30 and 60 are independent of each other, and have the same arrangement as each other. Accordingly, in the following description, the second hydraulic circuit 60 will be configured to have the same configuration as that of the first hydraulic circuit 30 except for specially mentioned cases, and thus, detailed description thereof will be omitted.

The master cylinder assembly 1 includes a brake pedal 2 to be operated by manipulation of a driver to generate a desired braking force, a booster 3 to amplify a manipulation force of the brake pedal 2, a master cylinder 4 to generate pressurized oil using a pressure applied by the booster 3, and an oil reservoir 5 connected to a top of the master cylinder 4 to store oil therein.

The first hydraulic circuit 30 includes a first suction line 31 to connect the oil reservoir 5 to a suction side of the first pump unit 21, a second suction line 32 to connect the master cylinder 4 to the suction side of the first pump unit 21, and a common discharge line 38 to connect the second suction line 32 to a discharge side of the first pump unit 21. The common discharge line 38 is provided with a normal open type discharge-side solenoid valve 53.

The first and second suction lines 31 and 32 are incorporated into a single common suction line 33 at the suction side of the first pump unit 21. The first and second suction lines 31 and 32 are provided, respectively, with first and second normal open type suction-side solenoid valves 51 and 52.

A brake line 40 is branched from the common discharge line 38, to transmit the pressurized oil, having passed through the master cylinder 4 and discharge-side solenoid valve 53, to the FL and RR brake cylinders 11 and 12. The brake line 40 is also connected to the common suction line 33. The brake line 40 is provided with a plurality of solenoid valves 41 and 42 to control the transmission and discharge of the pressurized oil to the FL and RR brake cylinders 11 and 12, and a low-pressure accumulator 43 to temporarily store the pressurized oil therein.

As stated above, the second hydraulic circuit 60 has approximately the same configuration as that of the first hydraulic circuit 30 although respective components thereof are designated by different reference numerals from those of the first hydraulic circuit 30 in FIG. 1. Accordingly, a first suction line 61 of the second hydraulic circuit 60 is connected to the oil reservoir 5 by way of a single common line 15.

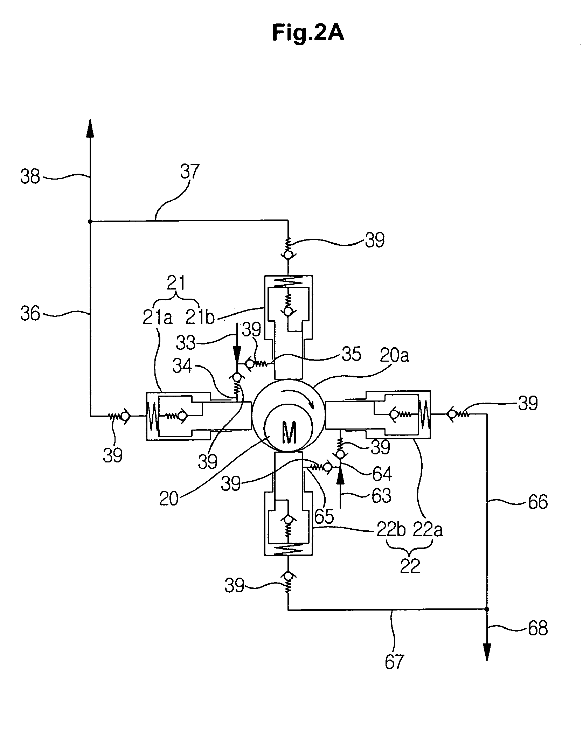

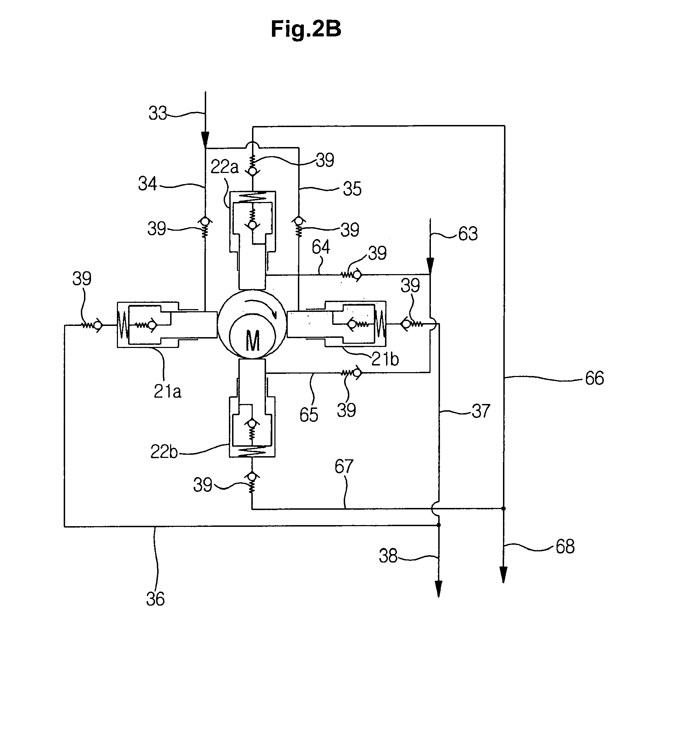

As stated above, the first and second pump units 21 and 22, which are driven by the single motor 20, include, respectively, first and second pumps 21 a and 21 b and third and fourth pumps 22a and 22b. Referring to FIGS. 2A and 2B, the first to fourth pumps 21 a, 21 b, 22a, and 22b are arranged radially about a rotating shaft 20a of the motor 20. Now, detailed arrangement of the pumps 21 a, 21 b, 22a, and 22b will be explained with reference to FIGS. 2A and 2B.

FIGS. 2A and 2B illustrate schematically different arrangements of the motor and pump units in FIG. 1.

First, as shown in FIG. 2A, the first and second pumps 21 a and 21 b of the first pump unit 21 are arranged adjacent to each other at angular positions of 0 degree and 90 degree, respectively, around the rotating shaft 20a of the motor 20. The third and fourth pumps 22a and 22b of the second pump unit 22 are arranged adjacent to each other at angular positions of 180 degree and 270 degree, respectively.

With this arrangement, if the rotating shaft 20a rotates in accordance with the operation of the motor 20, the first pump unit 21 discharges oil at phases of 0 degree and 90 degree, and the second pump unit 22 discharge oil at phases of 180 degree and 270 degree. That is, each of the first and second hydraulic circuits 30 and 60 applies a pressure to the oil twice when the rotating shaft 20a rotates one turn. This increases the period of a pressure pulse while reducing the width of the pressure pulse, resulting in a reduced shaking phenomenon and reduced operational noise in the master cylinder 4.

The common suction line 33 is divided into first and second suction lines 34 and 35 connected, respectively, to the first and second pumps 21 a and 21 b. Similarly, a common suction line 63 is divided into third and fourth suction lines 64 and 65 connected, respectively, to the third and fourth pumps 22a and 22b. Each of the suction lines 34, 35, 64, and 65 is provided with a check valve 39 or 69 to prevent the backflow of oil.

FIG. 2B corresponds to FIG. 2A except for arranging the first to fourth pumps 21 a, 21 b, 22a, and 22b at different angular positions. Specifically, the first and second pumps 21 a and 21 b of the first pump unit 21 are arranged at angular positions of 0 degree and 180 degree around the rotating shaft 20a of the motor 20, respectively, whereas the third and fourth pumps 22a and 22b of the second pump unit 22 are arranged at angular positions of 90 degree and 270 degree, respectively. With this arrangement, if the rotating shaft 20a of the motor 20 rotates one turn, the first pump unit 21 discharges oil at phases of 0 degree and 180 degree, whereas the second pump unit 22 discharges oil at phases of 90 degree and 270 degree.

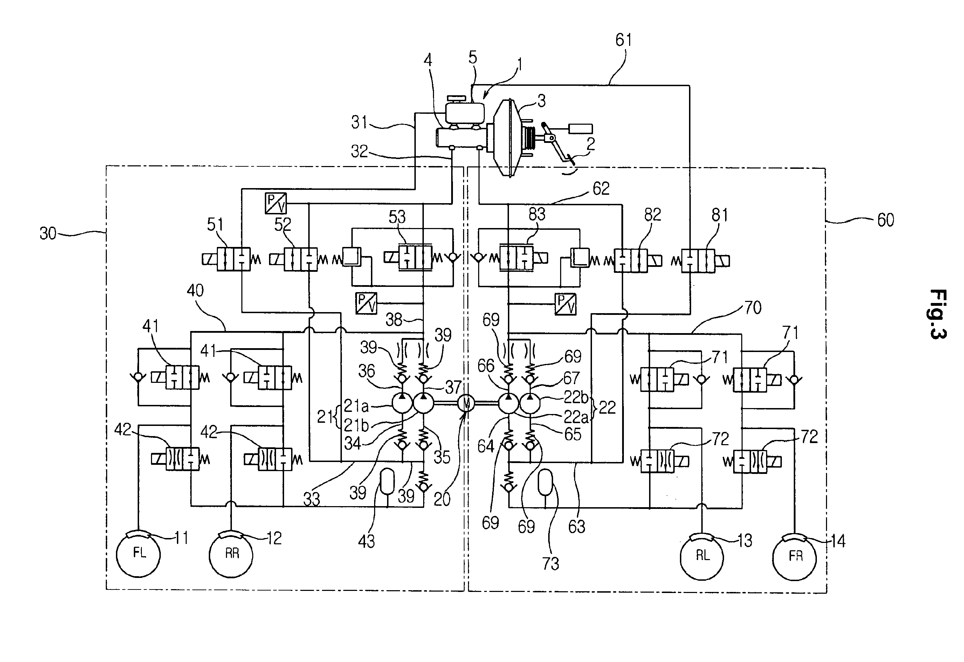

FIG. 3 is a hydraulic circuit diagram of an electronically controlled brake system consistent with a second embodiment of the present invention.

As shown in FIG. 3, differently from the above described first embodiment in which the first suction lines 31 and 61 of the first and second hydraulic circuits 30 and 60 are connected to the oil reservoir 5 by way of the single common line 15, the electronically controlled brake system consistent with the second embodiment of the present invention is configured such that the first and second suction lines 31 and 61 of the first and second hydraulic circuits 30 and 60 are directly connected to the oil reservoir 5. The other configurations of the second embodiment are equal to those of the first embodiment, and thus, detailed description thereof will be omitted.

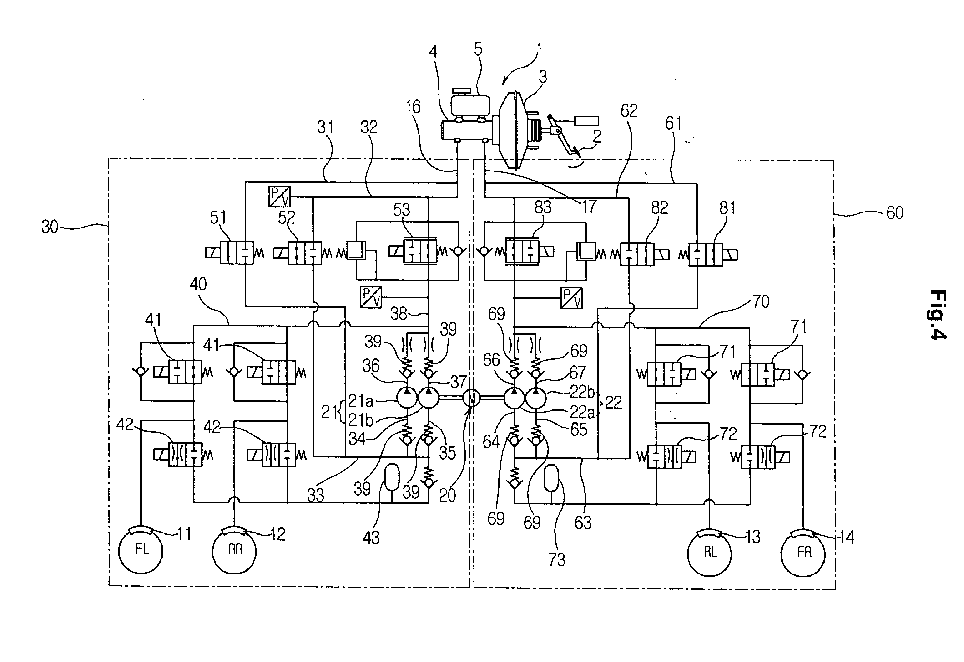

FIG. 4 is a hydraulic circuit diagram of an electronically controlled brake system consistent with a third embodiment of the present invention. The electronically controlled brake system of the third embodiment is similar to those of the first and second embodiments except for the fact that both the first and second suction lines 31 and 32 of the first hydraulic circuit 30 are connected to the master cylinder 4 by way of a single common line 16, and both the first and second suction lines 61 and 62 of the second hydraulic circuit 60 are connected to the master cylinder 4 by way of a single common line 17, and thus, detailed description thereof will be omitted.

As apparent from the above description, in an electronically controlled brake system according to the present invention, a plurality of suction lines are provided, respectively, to connect a suction side of each pump to a master cylinder, each suction line being provided with a suction-side solenoid valve. Also, a plurality of pumps are provided in each hydraulic circuit while being connected to a single motor. With this configuration, the brake system consistent with the present invention can achieve a high pressure boosting capacity, and thus, result in a rapid increase in the pressure of brake oil while reducing the width of a pressure pulse and operational noise generated upon the discharge of pressurized oil.

Furthermore, the electronically controlled brake system consistent with the present invention is configured such that a plurality of suction-side solenoid valves are connected to an oil reservoir. With this configuration, even if the pressure of wheels drops due to an excessive vehicle slippage during an active control operation, the brake oil can be returned to the oil reservoir by operating the suction-side solenoid valves without driving the pumps. This has the effect of reducing an operation time of the motor and pumps, and consequently, reducing operation noise thereof.

Although embodiments of the present invention have been shown and described, it would be appreciated by those skilled in the art that changes may be made in this embodiment without departing from the principles and spirit of the invention, the scope of which is defined in the claims and their equivalents.

## Claims

1. An electronically controlled brake system comprising:
a master cylinder assembly to provide a braking force;
a plurality of brake cylinders to initiate a braking operation;
first and second hydraulic circuits to connect the master cylinder assembly to the plurality of brake cylinders, to define a closed circuit; and
first and second pump units provided, respectively, at the first and second hydraulic circuits to realize an active control operation,
wherein the first hydraulic circuit includes a pair of suction lines to connect a suction side of the first pump unit to the master cylinder assembly, and the second hydraulic circuit includes a pair of suction lines to connect a suction side of the second pump unit to the master cylinder assembly, each suction line being provided with a suction-side solenoid valve.

2. The system according to claim 1, wherein the master cylinder assembly includes a master cylinder and an oil reservoir, and the pair of suction lines of each hydraulic circuit are connected, respectively, to the master cylinder and oil reservoir.

3. The system according to claim 1, wherein the master cylinder assembly includes a master cylinder and an oil reservoir, and the pair of suction lines of each hydraulic circuit are connected to the master cylinder.

4. The system according to claim 1, wherein the first and second pump units are commonly connected to a single motor to be operated by the motor.

5. The system according to claim 4, wherein the first pump unit includes first and second pumps, and the second pump unit includes third and fourth pumps, the first to fourth pumps being radially arranged around a rotating shaft of the motor.

6. The system according to claim 5, wherein the first and second pumps of the first pump unit are arranged, respectively, at angular positions of 0 degree and 90 degree around the rotating shaft of the motor, and the third and fourth pumps of the second pump unit are arranged, respectively, at angular positions of 180 degree and 270 degree.

7. The system according to claim 5, wherein the first and second pumps of the first pump unit are arranged, respectively, at angular positions of 0 degree and 180 degree around the rotating shaft of the motor, and the third and fourth pumps of the second pump unit are arranged, respectively, at angular positions of 90 degree and 270 degree.

8. The system according to claim 5, wherein a pair of discharge lines connected to the first and second pumps are incorporated into a single common discharge line, and a pair of discharge lines connected to the third and fourth pumps are incorporated into another single common discharge line.

9. The system according to claim 8, wherein each common discharge line is provided with a single discharge-side solenoid valve.
